(19) Europäisches Patentamt
European Patent Office
Office européen des brevets

(11) Veröffentlichungsnummer: **0 414 079 A2**

# (12) EUROPÄISCHE PATENTANMELDUNG

(21) Anmeldenummer: **90115445.0**

(51) Int. Cl.5: **C08G 75/02**

(22) Anmeldetag: **11.08.90**

(30) Priorität: **24.08.89 DE 3927929**

(43) Veröffentlichungstag der Anmeldung:
**27.02.91 Patentblatt 91/09**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Rüsseler, Wolfgang, Dr.**
**Waldhofstrasse 121**
**D-4150 Krefeld(DE)**
Erfinder: **Idel, Kartsen-Josef, Dr.**
**Am Schwarzkamp 38**
**D-4150 Krefeld(DE)**
Erfinder: **Dorf, Ernst-Ulrlich, Dr.**
**Bodelschwingstrasse 16**
**D-4150 Krefeld(DE)**
Erfinder: **Alewelt, Wolfgang, Dr.**
**Stratumer Feld 17**
**D-4150 Krefeld 12(DE)**
Erfinder: **Freitag, Dieter, Dr.**
**Hasenheide 10**
**D-4150 Krefeld(DE)**

## (54) Verfahren zur Herstellung von Polyarylensulfiden.

(57) Die Erfindung betrifft ein Verfahren zur Herstellung von Polyarylensulfiden aus Alkalisulfid und Dihalogenaromaten, wobei das Alkalisulfid in situ hergestellt wird.

EP 0 414 079 A2

## VERFAHREN ZUR HERSTELLUNG VON POLYARYLENSULFIDEN

Die Erfindung betrifft ein vereinfachtes Verfahren zur Herstellung von Polyarylensulfiden aus Alkalisulfid und Dihalogenaromaten, wobei das Alkalisulfid in situ hergestellt wird.

Polyarylensulfide und Verfahren zu ihrer Herstellung sind bekannt, z.B. US-A 33 54 129, US-A 3 919 177, EP-A 39 508, EP-A 73 525, EP-A 73 526, EP-A 86 487, EP-A 166 368, DE-A 25 24 471, EP-A 226 909, EP-A 226 998, EP-A 240 016, DE-A 37 25 997, EP-A 272 903, EP-A 302 218, EP-A 306 025. Dies sind u.a. Umsetzungen unter hohen Drücken. Bekanntlich bereitet dies konstruktive und verfahrenstechnische Probleme, die z.B. mit der Handhabung von Druck bei korrosiven Medien und hoher Temperatur verbunden sind. Weitere spezifische Nachteile ergeben sich aus den jeweiligen Verfahrensvariationen, wie mehrstufige Reaktionsführung, Einsatz erheblicher Mengen Hilfsstoffe mögliche Hydrolyse der Dihalogenaromaten durch wasserhaltige Reaktionsmischungen, Korrosion usw.. Dies kann im Produkt zu niedrigem Molekulargewicht und mangelnder Qualität führen.

Aus den EP-A 126 369, EP-A 142 024, EP-A 171 021, EP-A 215 259 sind vereinfachte Verfahren ohne Anwendung von Druck bekannt. Dies sind mehrstufige Verfahren (EP-A 126 369, EP-A 215 259), wobei die Dosierung korrosiver Medien mit entsprechenden Vorlagekesseln und Dosiereinrichtungen (z.B. EP-A 142 024, EP-A 171 021, EP-A 215 259) technisch aufwendig sein kann.

Aus der EP-A 109 637 sind Eintopfreaktionen (Verfahrensdurchführung in einem Kessel) zur Herstellung von Polyarylensulfiden mit vergleichsweise geringem technischen Aufwand bekannt, die jedoch nicht in allen Belangen zufriedenstellend verlaufen.

Ziel der Erfindung ist es somit, ein weiter verbessertes, technisch einfaches Verfahren zur Herstellung von Polyarylensulfiden, vorzugsweise Polyphenylensulfid bereitzustellen. Das erfindungsgemäße Verfahren weist gegenüber den bekannten Vorteile auf, z.B. weitgehende Vermeidung der Hydrolyse der Dihalogenaromaten durch Verkürzung der Kontaktzeiten, weitgehende Vermeidung der Schaumbildung während der Entwässerung und der Reaktion, verbesserte Raum/Zeit-Ausbeute und damit verringerten Energieverbrauch, Verzicht auf Hilfsstoffe, verbesserte Produktqualität, geringere Belastung der Kreisläufe zur Rückgewinnung von Löse- und Waschflüssigkeiten.

Gegenstand der Erfindung ist ein Verfahren zur Herstellung von Polyarylensulfiden aus

a) gleichen oder verschiedenen Dihalogen-(hetero)aromaten, vorzugsweise Dihalogenaromaten, der Formeln (I), (II) und/oder (III)

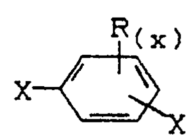

(I)

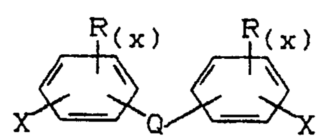

(II)

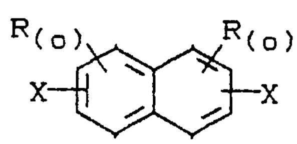

(III)

in denen

X Halogen wie Chlor oder Brom bedeutet,

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und

Q für eine Einfachbindung oder eine Gruppe wie $-CR^1_2-$, -Ar-, -O-, -S-, $-NR^1-$, -C(O)-, -C(O)-Ar-C(O)-, -C-(O)-$NR^1$-C(O)- steht, wobei $R^1$ die obengenannte Bedeutung hat und Ar für einen $C_6$-$C_{24}$-Aromaten oder Heteroaromaten steht, und

n für die Zahlen 1, 2, 3 oder 4 steht,

m für die Zahlen 1, 2 oder 3 steht,

wobei gegebenenfalls bis zu 20 Mol-% des Dihalogenaromaten durch $C_1$-$C_{36}$-Dihalogenaliphaten ersetzt sein können und/oder $C_8$-$C_{36}$-Aromaten, die mindestens zwei aliphatisch gebundene Halogene enthalten und

b) gegebenenfalls 0,05 bis 3 Mol-%, bezogen auf die Summe aus a) Tri- oder Tetrahalogenaromaten der Formel (IV)

$ArX_n$ (IV),

in der

X für Halogen wie Chlor oder Brom steht,

Ar für einen $C_6$-$C_{24}$-Aromaten oder Heteroaromaten, bei dem bis zu 3 C-Atome durch Heteroatome wie N, O, S ersetzt sein können, steht und

n für die Zahl 3 oder 4 steht,

und/oder

gegebenenfalls 0,05 bis 7,5 Mol-% bezogen auf die Summe aus a) Verbindungen zur Regelung des Molekulargewichts, vorzugsweise Monohalogen- und/oder Monohydroxyaromaten,

und

c) aus Alkalihydroxid und Schwefelwasserstoff in situhergestellten Alkalisulfiden, bevorzugt Natrium- oder Kaliumsulfid oder deren Mischungen, gegebenenfalls zusammen mit Alkalihydrogensulfiden

in

d) einem polaren, aprotischen organischen Lösungsmittel,

dadurch gekennzeichnet, daß

i) die 1,8- bis 2,4-fache molare Menge, bezogen auf die Summe der Dihalogenaromaten unter a), Alkalihydroxid, bevorzugt Natrium- oder Kaliumhydroxid, im Reaktionskessel mit dem polaren Lösungsmittel bei Raumtemperatur und Normaldruck bzw. leicht erhöhtem Druck bis zu 10 bar vorgelegt wird, und

ii) anschließend, gegebenenfalls unter gleichzeitigem Aufheizen, die 0,9- bis 1,2-fache molare Menge, bezogen auf die Summe der Dihalogenaromaten unter a), Schwefelwasserstoff gasförmig oder kondensiert zugegeben wird, und

iii) anschließend oder gleichzeitig auf eine Temperatur von mindestens 150 °C aufgeheizt wird, und

iv) anschließend der/die Dihalogenaromat(en) unter a) zugegeben werden, und

v) anschließend durch azeotrope Destillation mit Hilfe des/der Dihalogenaromaten bei einer Mindesttemperatur, die der Siedetemperatur des wasserhaltigen Azeotrops entspricht, das Wasser in einer Zeit von 5 bis 100 Minuten abgetrennt wird, und

vi) die Temperatur kontinuierlich auf 230-250 °C gesteigert wird, wobei der Beginn der Temperatursteigerung in v) liegt oder daran anschließt, und diese Temperatur dann über eine bestimmte Zeitspanne gehalten wird.

Die Zugabe des Schwefelwasserstoffs erfolgt über einen Zeitraum von 1 Minute bis 4 Stunden, der ausreichend ist um eine vollständige Umsetzung mit dem Alkalihydroxid zu erreichen.

Als Alkalihydroxid kann Natrium- und/oder Kaliumhydroxid verwendet werden.

Die Zeitspanne in Vi) beträgt 1 h bis 48 Stunden.

Die Umsetzung wird gegebenenfalls unter Inertgas (z.B. $N_2$) durchgeführt.

Die Reaktionszeit kann innerhalb einer weiten Spanne variiert werden. Sie kann von weniger als 1 Stunde bis zu mehreren Tagen, vorzugsweise von 1 Stunde bis 48 Stunden, besonders bevorzugt 2 bis 18 Stunden, betragen. Nicht umgesetzter Schwefelwasserstoff kann zu einem beliebigen Zeitpunkt der Polymerbildung über Kopf entweichen und z.B. recyclisiert werden Nicht umgesetzte Halogenaromaten können am Ende der Reaktion aus dem Reaktionsgemisch beispielsweise destillativ abgetrennt werden.

In einer besonderen Ausführungsform der Erfindung können auch Mehrkesselkaskaden bis hin zu einer kontinuierlichen Reaktionsführung verwendet werden. Es kann in bestimmten Fällen auch von Vorteil sein, Apparaturen zu verwenden, bei denen alle Teile, die mit der Reaktionsmischung in Berührung kommen, aus korrosionsbeständigen Materialien bestehen bzw. damit beschichtet sind, z.B. Titan, Zirkon, Glas, bestimmte Edelstähle und unter den Reaktionsbedingungen beständige Kunststoffe.

Die Isolierung der Polyarylensulfide kann z.B. in an sich bekannter Weise durch Abkühlen, Filtern und Waschen des Reaktionsgemisches zunächst mit Ketonen wie Aceton oder Alkoholen wie Methanol, Ethanol oder Isopropanol oder Reaktionslösungsmittel erfolgen. Der verbleibende Rückstand kann dann in Wasser suspendiert werden. Die in diesem Fall erhaltene Suspension wird mit Säuren wie Essigsäure, Salzsäure, Phosphorsäure, Schwefelsäure usw. sauer gestellt und anschließend mit Wasser gewaschen. Die so erhaltenen Polyarylensulfide sind praktisch elektrolytfrei.

Beispiele für erfindungsgemäß verwendbare Dihalogenaromaten der Formeln (I), (II) oder (III) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom-2-ethylbenzol, 1,4-Dichlor-2,3,5,6-tetramethylbenzol, 1,4-Dichlor-2-cyclohexylbenzol, 2-Benzyl-1,4-dichlorbenzol, 2,4-Dichlortoluol, 2,4-Dichlorxylol, 2,4-Dichlorcumol, 4,4′-Dichlorbiphenyl, 4,4′-Dichlorterphenyl, 4,4′-Dibrombiphenyl, 3,3′-Dichlorbiphenyl, 3,3′-Dibrombiphenyl, 2,4′-Dichlorbiphenyl, 2,4′-Dibrombiphenyl, 1,4-Dichlornaphthalin, 1,4-Dibromnaphthalin, 1,5-Dichlornaphthalin, 2,6-Dichlornaphthalin, 2,6-Dibromnaphthalin, 2,7-Dichlornaphthalin, 2,7-Dibromnaphthalin, 1,8-Dichlornaphthalin, 1,8-Dibromnaphthalin, 4,4′-Dichlorbenzophenon, 4,4′-Dichlordiphenylsulfon, 1,4-Bis(4-chlorbenzoyl)benzol, Bis-(4-chlorbenzoesäure)imid, N-Methyl-bis-(4-chlorbenzoesäure)imid, N-Phenyl-bis-(4-chlorbenzoesäure)imid, N,N′-Bis-(4-chlorbenzoyl)phenylendiamin, N,N′-DiphenylN,N′-bis(4-chlorbenzoyl)phenylendiamin etc. Bevorzugt werden 1,4-Dichlorbenzol und 1,3-Dichlorbenzol.

Mindestens 20 Mol-% der eingesetzten Dihalogenaromaten sollten mit Wasser flüchtige Azeotrope bilden können, wie z.B. 1,4-Dichlorbenzol, 1,3-Dichlorbenzol, 2,5-Dichlortoluol, 2,5-Dichlorxylol, 1,4-Dichlor-2-ethylbenzol etc.

In einer bestimmten Ausführungsform der Erfindung können bis zu 20 Mol-% der Dihalogenaromaten durch lineare, verzweigte oder cyclische (ab $C_5$) $C_1$-$C_{36}$-Dihalogenaliphaten die Cl, Br enthalten wie Dichlormethan, 1,2-Dichlorethan, 1,3-Dichlorpropan, 1,3-Dichlorbutan, 2,3-Dichlorbutan, 1,4-Dichlorbutan, 1,2-Dichlor-2-methylpropan, 1,3-Dichlor-2,2-dimethylpropan, 1,5-Dichlorpentan, 1,6-Dichlorhexan, 1,7-Dichlorheptan, 1,8-Dichloroctan, 1,9-Dichlornonan, 1,10-Dichlordecan, 1,11-Dichlorundecan, 1,12-Dichlordodecan, höhere Dichlorparaffine, 1,2-Dichlorcyclohexan, 1,3-Dichlorcyclohexan, 1,4-Dichlorcyclohexan etc. oder durch $C_8$-$C_{36}$-Aromaten, die mindestens zwei aliphatisch gebundene Halogene wie Cl, Br enthalten, wie o-Xylylendichlorid, m-Xylylendichlorid, p-Xylylendichlorid, 1,3-Bis(chlormethyl)-4,6-dimethylbenzol etc. ersetzt werden.

Beispiele für erfindungsgemäß einsetzbare Verzweiger der Formel (IV) sind 1,2,4-Trichlorbenzol, 1,3,5-Trichlorbenzol, 1,3,5-Tribrombenzol, 1,3,5-Tris(4-chlorphenyl)benzol, 1,3,5-Tris(4-bromphenyl)benzol, 2,2′,4,4′-Tetrachlordiphenyl, 2,2′,4,4′-Tetrachlordiphenylsulfid etc.

Beispiele für erfindungsgemäß einsetzbare Verbindungen zur Regelung des Molekulargewichts sind Phenol, Thiophenol, deren Alkalisalze (Li, Na, K), Brombenzol, 4-Chlordiphenyl,·4-Chlordiphenylsulfon, 4-Chlordiphenylsulfid, 1-Chlornaphthalin, 2-Chlornaphthalin etc.

Beispiele für erfindungsgemäß einsetzbare polare aprotische Lösungsmittel sind Amide wie Hexamethylphosphorsäuretriamid, N,N-Dimethylformamid, Sulfone wie Diphenylsulfon, Lactame wie N-Methylpyrrolidon, N-Ethylpyrrolidon, N-Isopropylpyrrolidon, N-Methylpiperidon, N-Ethylcaprolactam, Heterocyclen wie N,N′-Dimethylimidazolidinon, N,N′-Dimethylpyrimidazolidinon, Methyloxophospholan etc. Der Siedepunkt der Lösungsmittel sollte bei 200 °C bis 280 °C liegen. Zur Erreichung des genannten Temperaurbereichs kann die Reaktion unter leichtem Überdruck (bis zu 10 bar) durchgeführt werden.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Schwefelwasserstoff, eingesetzt werden, z.B. N,N-Dimethylacetamid, N,N-Diethylacetamid, N,N-Dimethylpropionamid.

Als Katalysatoren können in üblichen Mengen übliche Substanzen eingesetzt werden, wie z.B. Natrium- oder Kaliumfluoride, -phosphate, -carboxylate oder -capronate in Mengen von 0,02 bis 1,0 Mol Katalysator pro Mol Schwefelwasserstoff.

Die erfidungsgemäßen Polymeren haben Molekulargewichte $M_n$ von ca. 1000 bis 100 000. Die Bestimmung der Molekulargewichte erfolgt beispielsweise über eine chromatographische Methode oder über Schmelzviskositätsmessungen (siehe z.B. EP-A 171 021).

Weiterer Gegenstand der Erfindung ist die Verwendung der nach dem erfindungsgemäßen Verfahren hergestellten Polyarylensulfide, gegebenenfalls in Mischung mit üblichen Füll-, Verstärkungs- und Hilfsstoffen und/oder Polymeren zur Herstellung geformter Körper.

Geformte Körper im Sinne der Erfindung sind Extrudate wie Fasern, Folien, Platten, Rohre, Profile etc., nach Standardverfahren spritzgegossene Formteile oder nach Standardverfahren erhaltene Verbundwerkteile.

Die erfindungsgemäßen Polyarylensulfide können gegebenenfalls mit üblichen Füll- und Verstärkungsstoffen (z.B. Modern Plastics Encyclopedia 1988, Vol. 64, No. 10A, S. 183-194), üblichen Hilfsmitteln (loc. cit., S. 127-178) in üblichen Mengen (bis etwa 300 Gew.-%) abgemischt werden.

Die geformten Körper können weiterhin gegebenenfalls andere Polymere wie (Co)-Polyarylensulfide, Polykondensate, Polyaddate, Polymerisate etc. enthalten.

Die erfindungsgemäß hergestellten Polyarylensulfide können als geformte Körper in üblicher Weise Verwendung finden, z.B. als Automobilteile, Armaturen, Ventile, Kugellagerteile, Elektroteile wie z.B. Schalter, elektronische Tafeln, chemikalienresistente und bewitterungsstabile Teile und Apparate wie Pumpengehäuse und Pumpenflügelräder, Ätzbadschalen, Dichtungsringe, Teile von Büromaschinen, Fernmeldeeinrichtungen sowie Haushaltsgeräten.

## Beispiele

### Beispiel 1

In einem mit Glasrührer ausgerüsteten 4 l-Glasreaktor werden 1726 g N-Methylcaprolactam und 425,6 g Natriumhydroxid unter Stickstoff-Atmosphäre vorgelegt. Danach werden 200 g Schwefelwasserstoff in ca. 20 Minuten unter Rühren in die Mischung eingeleitet. Man heizt in ca. 15 Minuten auf 150 °C auf und läßt dann 782 g 1,4-Dichlorbenzol unter weiterem Aufheizen auf 180 °C zulaufen. Die Entwässerung erfolgt dabei in ca. 10 Minuten, wobei azeotrop abdestilliertes 1,4-Dichlorbenzol in das Reaktionsgefäß zurückgeführt wird. Dann wird der Ansatz auf Rückflußtemperatur gebracht.

Nach ca. 10 Stunden Gesamtreaktionszeit wird das Produkt durch Fällen in 25 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist nahezu farblos, das Produkt fällt als rein weißes, faserartiges Material an (534 g = 93 %).

### Beispiel 2

Reproduktion von Beispiel 1:

In einem mit Glasrührer ausgerüsteten 4 l-Glasreaktor werden 1726 g N-Methylcaprolactam und 425,6 g Natriumhydroxid unter Stickstoff-Atmosphäre vorgelegt. Danach werden 200 g Schwefelwasserstoff in ca. 15 Minuten unter Rühren in die Mischung eingeleitet. Man heizt in ca. 15 Minuten auf 150 °C auf und läßt dann 782 g 1,4-Dichlorbenzol unter weiterem Aufheizen auf 180 °C zulaufen. Die Entwässerung erfolgt dabei in ca. 20 Minuten, wobei azeotrop abdestilliertes 1,4-Dichlorbenzol in das Reaktionsgefäß zurückgeführt wird. Dann wird der Ansatz auf Rückflußtemperatur gebracht.

Nach ca. 10 Stunden Gesamtreaktionszeit wird das Produkt durch Fällen in 25 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist leicht gelblich, das Produkt fällt als rein weißes, faserartiges Material an (528 g = 92 %).

### Beispiel 3

In einem 10 l-Reaktor mit Rührer, Kolonne und Wasserabscheider (alle produktberührenden Teile aus Titan) werden 3890 g N-Methylcaprolactam und 960 g Natriumhydroxid unter Stickstoff-Atmosphäre vorgelegt. Danach werden 450 g Schwefelwasserstoff in ca. 30 Minuten unter Rühren in die Mischung eingeleitet. Man heizt in ca. 15 Minuten auf 150 °C auf und läßt dann 1764 g 1,4-Dichlorbenzol unter weiterem Aufheizen auf 180 °C zulaufen. Die Entwässerung erfolgt dabei in ca. 25 Minuten. Dann wird der Ansatz auf Rückflußtemperatur gebracht.

Nach ca. 11 Stunden Gesamtreaktionszeit wird das Produkt durch Fällen in 55 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist nahezu farblos, das Produkt fällt als rein weißes, faserartiges Material an (1218 g = 94 %).

### Beispiel 4

In einem 5 l-V4A-Reaktor mit Rührer, Kolonne und Wasserabscheider werden 2700 g N-Methylcaprolactam und 665 g Natriumhydroxid unter Stickstoff-Atmosphäre vorgelegt. Danach werden 310 g Schwefelwasserstof in ca. 20 Minuten unter Rühren in die Mischung eingeleitet. Man heizt in ca. 15 Minuten auf 150 °C auf und läßt dann 1223 g 1,4-Dichlorbenzol unter weiterem Aufheizen auf 180 °C zulaufen. Die Entwässerung erfolgt dabei in ca. 20 Minuten. Dann wird der Ansatz auf Rückflußtemperatur gebracht.

Nach ca. 11 Stunden Gesamtreaktionszeit wird das Produkt durch Fällen in 40 l Isopropanol, Filtration, Waschen in verdünnter Schwefelsäure, Waschen in Wasser und Trocknung im Vakuumtrockenschrank isolierte. Die Farbe der Isopropanol-Fällmutterlauge ist gelblich, das Produkt fällt als weißliches, faserartiges Material an (809 g = 90 %).

Beispiel 5

Vergleichsbeispiel entsprechend Beispiel 1 mit käuflichen Alkalisulfiden:

In einem mit Glasrührer ausgerüsteten 4 l-Glasreaktor werden 1726 g N-Methylcaprolactam, 583,5 g Natriumsulfidhydrat (60 %-Ware) und 91,8 g Natriumhydrogensulfidmonohydrat unter Stickstoff-Atmosphäre vorgelegt. Man heizt in ca. 30 Minuten auf 150 °C auf und läßt dann 782 g 1,4-Dichlorbenzol unter weiterem Aufheizen auf 180 °C zulaufen. Die Entwässerung erfolgt dabei in ca. 45 Minuten, wobei azeotrop abdestilliertes 1,4-Dichlorbenzol in das Reaktionsgefäß zurückgeführt wird. Dann wird der Ansatz auf Rückflußtemperatur gebracht.

Nach ca. 11 Stunden Gesamtreaktionszeit wird das Produkt durch Fällen in 25 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist braun, das Produkt fällt als ockerfarbenes, faserartiges Material an (517 g = 90 %).

Beispiel 6

Eintopfvariante nach EP-B 109 637 (Beispiel 2) zum Vergleich:

(Anmerkung: Die Aufarbeitung wurde wegen der besseren Vergleichbarkeit an die der erfindungsgemäßen Beispiele angepaßt).

In einem 2 l-Dreihalskolben, der mit Thermometer, Rührer und Kolonne mit Destillatteiler ausgerüstet ist, werden unter Stickstoff 1110 g N-Methylcaprolactam, 305,2 g Natriumsulfidhydrat (60 %-Ware), 28 g 50 %ige Natronlauge, 341,1 g 1,4-Dichlorbenzol und 38,05 g Natriumacetat vorgelegt. Das Umsetzungsgemisch wird langsam zum Sieden erhitzt. Aus dem destillierenden Azeotrop, bestehend aus Wasser und 1,4-Dichlorbenzol, wird das Wasser abgetrennt und das 1,4-Dichlorbenzol in das Reaktionsgefäß zurückgeführt. Nach 2 Stunden ist die Entwässerung beendet. Während dieser Zeit tritt eine Schaumbildung auf, die sowohl die technische Durchführung der Destillation als auch die Einhaltung der Stöchiometrie in der heterogenen Reaktionsmischung erschwert. Es wird weitere 9 Stunden zum Rückfluß erhitzt und das Produkt durch Fällen in 20 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist dunkelbraun, das Produkt fällt als weißliches, faserartiges Material an (224,7 g = 92 %).

Beispiel 7

Eintopfvariante nach EP-A 171 021 (Beispiel 7 auf Seite 55) zum Vergleich:

(Anmerkung: Die Aufarbeitung wurde wegen der besseren Vergleichbarkeit an die der erfindungsgemäßen Beispiele angepaßt).

In einem 2 l-Dreihalskolben, der mit Thermometer, Rührer und Kolonne mit Destillatteiler ausgerüstet ist, werden unter Stickstoff 1110 g N-Methylcaprolactam, 323,5 g Natriumsulfidhydrat (60 %-Ware), 2,4 g 50 %ige Natronlauge, 341,1 g 1,4-Dichlorbenzol, 38,05 g Natriumacetat sowie 4,44 g $\epsilon$-Caprolactam vorgelegt. Das Umsetzungsgemisch wird langsam zum Sieden erhitzt. Aus dem destillierenden Azeotrop, bestehend aus Wasser und 1,4-Dichlorbenzol, wird das Wasser abgetrennt und das 1,4-Dichlorbenzol in das Reaktionsgefäß zurückgeführt. Nach 2 Stunden ist die Entwässerung beendet. Während dieser Zeit tritt eine Schaumbildung auf, die sowohl die technische Durchführung des Destillation als auch die Einhaltung der Stöchiometrie in der heterogenen Reaktionsmischung erschwert. Es wird weitere 9 Stunden zum Rückfluß erhitzt und das Produkt durch Fällen in 20 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist dunkelbraun, das Produkt fällt als weißliches, faserartiges Material an (234,7 g = 94 %).

Beispiel 8

Dosiervariante nach EP-A 171 021 (Beispiel 8 auf Seite 55) zum Vergleich:

In einem 2 l-Dreihalskolben, der mit Thermometer, Rührer, kühlbarer Kolonne, Destillatteiler und Rückflußkühler ausgerüstet ist, werden unter Stickstoff 1110 g N-Methylcaprolactam und 341,1 g 1,4-Dichlorbenzol vorgelegt und auf 190 bis 200 °C erwärmt. Dazu wird eine Lösung von 323,5 g Natriumsulfidhydrat (60 %-Ware), 2,4 g 50 %iger Natronlauge, 38,05 g Natriumacetat und 29,4 g ε-Caprolactam in insgesamt 250 ml Wasser (incl. Hydratwasser) so zugetropft, daß das zugeführte Wasser azeotrop mit dem 1,4-Dichlorbenzol abdestillieren kann. Das 1,4-Dichlorbenzol wird dabei in den Ansatz zurückgeführt. Während dieser Zugabe tritt besonders gegen Ende ein starkes Schäumen des Ansatzes auf, das sowohl die technische Durchführung der Destillation als auch die Einhaltung der Stöchiometrie in der heterogenen Reaktionsmischung erschwert. Nach beendeter Zugabe und Entwässerung (ca. 4 h) wird weitere 10 Stunden zum Rückfluß erhitzt und das Produkt durch Fällen in 20 l Isopropanol, Filtration, Waschen in verdünnter Schwefelsäure, Waschen in Wasser und Trocknung im Vakuumtrockenschrank isoliert. Die Farbe der Isopropanol-Fällmutterlauge ist braun bis dunkelbraun, das Produkt fällt als weißliches, faserartiges Material an (230,37 g = 90 %).

Tabelle

| Zusammenfassung der Versuche 1 bis 8 | | | | | | | |
|---|---|---|---|---|---|---|---|
| Beispiel | Reaktionsadditive | Gesamtstandzeit | Kontaktzeit Wasser/DCB | Schaumbildung | Farbe der Mutterlauge | Produktfarbe | sonst. Kommentare |
| erfindungsgemäß : | | | | | | | |
| 1 | nein | 10 h | 10′ | nein | nahezu farblos | weiß | |
| 2 | nein | 10 h | 20′ | nein | leicht gelblich | weiß | |
| 3 | nein | 11 h | 25′ | nein | nahezu farblos | weiß | |
| 4 | nein | 11 h | 20′ | nein | gelblich | weiß | kein Korrosionsbelag im Kessel |
| außerhalb der Erfindung: | | | | | | | |
| 5 | nein | 11 h | 45′ | ja | braun | ocker | Anbackungen beim Aufheizen, niedermolekulares Prod. |
| 6 | ja | 11 h | 2 h | ja | dunkelbraun | weißl. | - |
| 7 | ja | 11 h | 2 h | ja | dunkelbraun | weißl. | - |
| 8 | ja | 14 h | 4 h | ja | braun | weißl. | - |
| Anmerkung: Die Produkte der Versuche 1 bis 4 bzw, 6 bis 8 waren hochmolekular und thermoplastisch verarbeitbar. | | | | | | | |

## Ansprüche

1. Verfahren zur Herstellung von Polyarylensulfiden aus

a) gleichen oder verschiedenen Dihalogen(hetero)aromaten der Formeln (I), (II) und/oder (III)

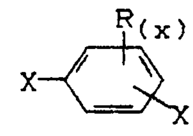

(I)

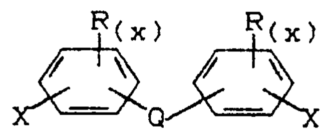

(II)

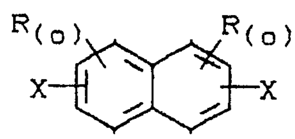

(III)

in denen

X Halogen wie Chlor oder Brom bedeutet,

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ unter Einbeziehung der benachbarten C-Atome im Ring zu einem $C_5$-$C_{14}$-aromatischen oder bis zu drei Heteroatome wie N, O, S enthaltenden heterocyclischen Ring verknüpft sein können, und

Q für eine Einfachbindung oder eine Gruppe wie $-CR^1_2-$, -Ar-, -O-, -S-, $-NR^1-$, -C(O)-, -C(O)-Ar-C(O)-, -C-(O)-$NR^1$-C(O)-steht, wobei $R^1$ die obengenannte Bedeutung hat und Ar für einen $C_6$-$C_{24}$-Aromaten oder Heteroaromaten steht, und

n für die Zahlen 1, 2, 3 oder 4 steht,

m für die Zahlen 1, 2 oder 3 steht,

wobei gegebenenfalls bis zu 20 Mol-% der Dihalogenaromaten durch $C_1$-$C_{36}$-Dihalogenaliphaten ersetzt sein können und/oder $C_8$-$C_{36}$-Aromaten, die mindestens zwei aliphatisch gebundene Halogene enthalten und

b) gegebenenfalls 0,05 bis 3 Mol-%, bezogen auf die Summe aus a) Tri- oder Tetrahalogenaromaten der Formel (IV)

$ArX_n$ (IV),

in der

X für Halogen wie Chlor oder Brom steht,

Ar für einen $C_6$-$C_{24}$-Aromaten oder Heteroaromaten, bei dem bis zu 3 C-Atome durch Heteroatome wie N, O, S ersetzt sein können, steht und

n für die Zahl 3 oder 4 steht,

und/oder

gegebenenfalls 0,05 bis 7,5 Mol-% bezogen auf die Summe aus a) Verbindungen zur Regelung des Molekulargewichts,

und

c) aus Alkalihydroxid und Schwefelwasserstoff in situ- hergestellten Alkalisulfiden, gegebenenfalls zusammen mit Alkalihydrogensulfiden

in

d) einem polaren, aprotischen organischen Lösungsmittel,

dadurch gekennzeichnet, daß

i) die 1,8- bis 2,4-fache molare Menge, bezogen auf die Summe der Dihalogenaromaten unter a), Alkalihydroxid, im Reaktionskessel mit dem polaren Lösungsmittel bei Raumtemperatur und Normaldruck bzw. leicht erhöhtem Druck bis zu 10 bar vorgelegt wird, und

ii) anschließend, gegebenenfalls unter gleichzeitigem Aufheizen, die 0,9- bis 1,2-fache molare Menge,

bezogen auf die Summe der Dihalogenaromaten unter a), Schwefelwasserstoff gasförmig oder kondensiert zugegeben wird, und

iii) anschließend oder gleichzeitig auf eine Temperatur von mindestens 150 °C aufgeheizt wird, und

iv) anschließend der/die Dihalogenaromat(en) unter a) zugegeben werden, und

v) anschließend durch azeotrope Destillation mit Hilfe des/der Dihalogenaromaten bei einer Mindestenstemperatur, die der Siedetemperatur des wasserhaltigen Azeotropfs entspricht, das Wasser in einer Zeit von 5 bis 100 Minuten abgetrennt wird, und

vi) die Temperatur kontinuierlich auf 230-250 °C gesteigert wird, wobei der Beginn der Temperatursteigerung in v) liegt oder daran anschließt, um diese Temperatur dann über eine bestimmte Zeitspanne gehalten wird.

2. Verfahren nach Anspruch 1, dadurch gekennzeichnet, daß Natriumhydroxid als Alkalihydroxid verwendet wird.

3. Verfahren nach Anspruch 1, dadurch gekennzeichnet, daß N-Methylcaprolactam, N,N'-Dimethylimidazolidinon oder N,N'-Dimethylpyrimidazolidinon als polare Lösungsmittel Verwendung finden.

4. Verfahren nach Anspruch 1, dadurch gekennzeichnet, daß zur Regelung des Molekulargewichts Monohalogen-und/oder Monohydroxyaromaten eingesetzt werden.

5. Verfahren nach Anspruch 1, dadurch gekennzeichnet, daß Natrium- und/oder Kaliumsulfid in situ hergestellt wird.

6. Verwendung der gemäß Anspruch 1 hergestellten Polyarylensulfide, gegebenenfalls in Mischung mit üblichen Füll-, Verstärkungs- und Hilfsstoffen und/oder Polymeren zur Herstellung geformter Körper.